(19) Europäisches Patentamt
European Patent Office
Office européen des brevets

(11) **EP 1 056 232 A2**

(12) **EUROPEAN PATENT APPLICATION**

(43) Date of publication:
29.11.2000 Bulletin 2000/48

(51) Int. Cl.$^7$: **H04B 10/207**

(21) Application number: **00110700.2**

(22) Date of filing: **19.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.05.1999 JP 14404299**

(71) Applicant: **SONY CORPORATION**
**Tokyo (JP)**

(72) Inventor:
**Toriumi, Yoichi,**
**c/o Sony Corporation**
**Tokyo (JP)**

(74) Representative:
**Körber, Martin, Dipl.-Phys. et al**
**Mitscherlich & Partner**
**Patentanwälte**
**Sonnenstrasse 33**
**80331 München (DE)**

(54) **Information communication system and information transfer method**

(57) In an information communication system including a first transmission line (102) for transferring a plurality of multiplexed information signals from a local station (101) which transmits and receives information signals, a plurality of second transmission lines (103) connected to the first transmission line (102) for transferring each of the multiplexed and transferred information signals, and communication terminal apparatuses (104) connected to the second transmission lines (103) and having a function for receiving the transferred information signals, the first transmission line (102) and the second transmission lines (103) are formed of optical fibers different in type, and the distance product of the transmission band limit of the first transmission line (102) is larger than that of the transmission band limit of the second transmission lines (103).

FIG. 7A

## Description

BACKGROUND OF THE INVENTION

1. Field of the Invention

The present invention relates to an improvement of an information communication system, and more particularly, to an information communication system for performing information communication by the use of optical fibers.

2. Description of the Related Art

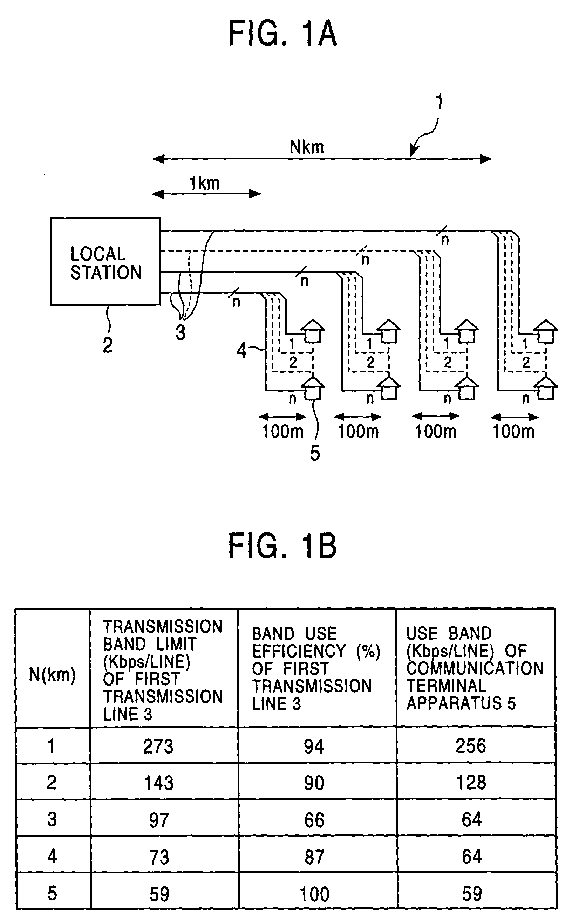

Fig. 1 is a system view showing an example of a related information communication system. An information communication system 1 will be described below by referring to Fig. 1.

The information communication system 1 shown in Fig. 1A includes a local station 2, first transmission lines 3, and communication terminal apparatuses 5 installed, for example, at houses. The local station 2 has units required for information communication, such as a switching system, and transmits and receives information signals formed of analog signals or digital signals. The local station 2 is connected to a plurality of first transmission lines 3. A communication terminal apparatus 5 is connected to each of the first transmission lines 3.

Each transmission terminal apparatus 5 can transmit and receive information to and from the local station 2 through the corresponding first transmission line 3. The distance from the local station to each transmission terminal apparatus 5 is N + 0.1 km (N is a natural number).

The transmission band limit of a usual copper line is 300 kbps・km, namely, 300 kbps per a transmission-line length of 1 km. Therefore, the transmission band limit from the local station 2 to the farthest communication terminal apparatus 5 is 300/(N + 0.1) kbps. Since this band is provided for one line, the transmission band limit does not depend on the number n of the communication terminal apparatuses 5 and is 300/(N + 0.1) kbps/line.

When N equals 4 (km), for example, the transmission band limit per one line of the first transmission lines 3 is 300/(N + 0.1) = 73 kbps/line. When band use efficiency is set to 87%, a communication-service band for the communication terminal apparatus 5 is 64 kbps/line. In the same way, communication services which the user can use are those shown in Fig. 1B, with N being set to 1 to 5 km.

As shown in Fig. 1B, in information communication performed by the information communication system 1 shown in Fig. 1A, the first transmission lines 3 are efficiently used in limited topologies in which N is set to 3 to 4 km at a band use efficiency of 66% to 87%, but the user can receive only a communication service of a low-frequency band such as 64 kbps/line.

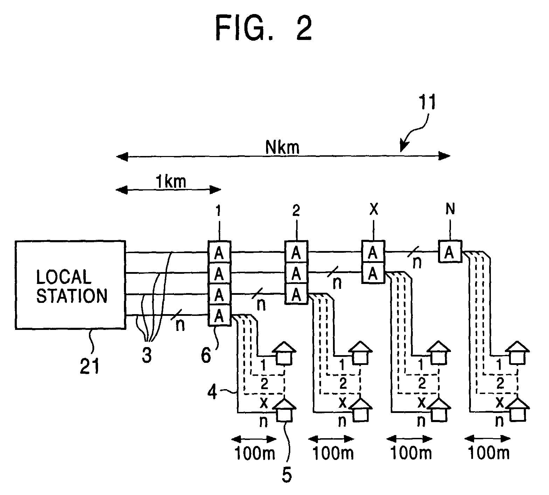

Therefore, as shown in Fig. 2, an information communication system 11 can be considered in which relay amplification apparatuses 6 are installed, for example, at an interval of 1 km in first transmission lines 3 in order to amplify intonation signals to be transferred through the first transmission lines 3 to prevent the signals from deteriorating. The distance from a local station 2 to the relay amplification apparatus 6 nearest to each communication terminal apparatus 5 is N km and the distance from each communication terminal apparatus 5 to the nearest relay amplification apparatus 6 is, for example, 100 m.

Since the transmission band limit of a usual copper line is 300 kbps・km as described above, the transmission band limit from the local station 2 to the relay amplification apparatus 6 nearest to each communication terminal apparatus 5 does not depend on N km and is 300 kbps. Because each communication terminal apparatus 5 is connected to the local station 2 by one line, the transmission band limit does not depend on the number n of communication terminal apparatuses 5, and is 300 kbps/line.

The transmission band limit from a relay amplification apparatus 6 to the corresponding communication terminal apparatus 5 is 300 (kbps・km)/0.1 (km) = 3 Mbps/line.

When the band use efficiency from the local station 2 to the relay amplification apparatus 6 nearest to each communication terminal apparatus 5 is set to 85% and the band use efficiency from the relay amplification apparatus 6 to the communication terminal apparatus 5 is set to 9%, for example, the communication terminal apparatus 5 can use a communication service of 300 (kbps/line) x 85(%) = 3 (Mbps/line) x 9(%) = 256 kbps/line. In the same way, when the band use efficiency from the local station 2 to the relay amplification apparatus 6 nearest to each communication terminal apparatus 5 is set to 100% and the band use efficiency from the relay amplification apparatus 6 to the communication terminal apparatus 5 is set to 10%, the communication terminal apparatus 5 can use a communication service of 300 (kbps/line) x 100(%) = 3 (Mbps/line) x 10(%) = 300 kbps/line.

As described above, in the information communication system 11, the band use efficiency from the local station 2 to the relay amplification apparatus 6 nearest to each communication terminal apparatus 5 is 85 % to 100% and a remarkable efficiency is provided. However, the band use efficiency from the relay amplification apparatus 6 to the communication terminal apparatus 5 is relatively as low as 9% to 10%, therefore the user can receive only a communication service of a low-frequency band such as 256 kbps/line to 300 kbps/line.

In the information communication systems 1 and 11 formed of copper lines only, shown in Fig. 1 and Fig. 2, the user can use a low-frequency transmission band and cannot obtain a satisfying communication service. Therefore, recent years, information communication systems using optical-fiber cables as transmission lines have been proposed.

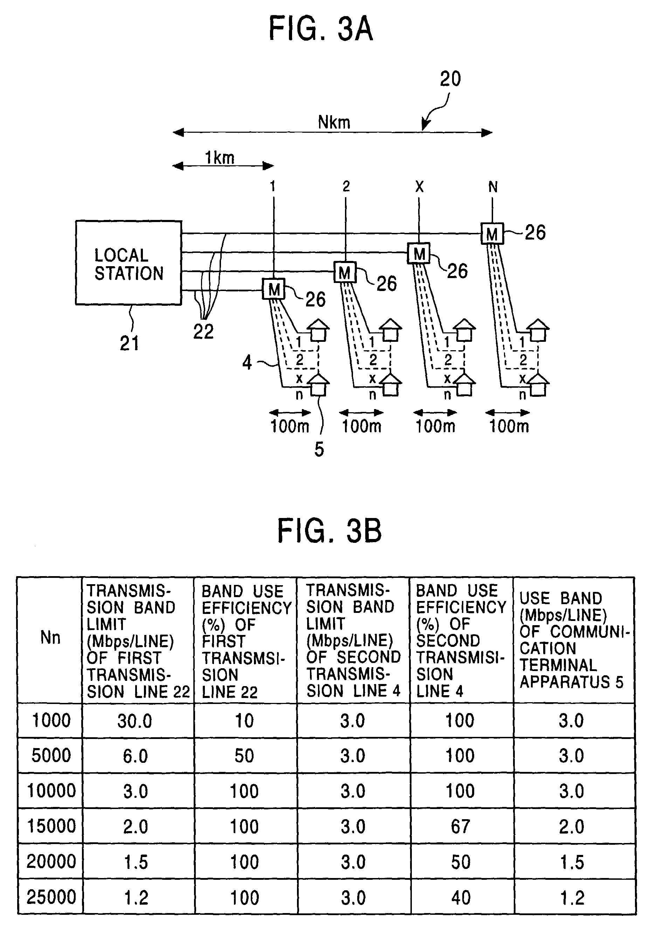

Fig. 3 is a system view showing an example of an information communication system using optical-fiber cables. An information communication system 20 will be described below by referring to Fig. 3A. In the information communication system 20 shown in Fig. 3A, the same symbols as those used in Fig. 1A are assigned to portions having the same structures as those in the information communication system 1 shown in Fig. 1A, and descriptions thereof will be omitted.

The information communication system 20 shown in Fig. 3A includes a local station 21, first transmission lines 22, second transmission lines 4, and communication terminal apparatuses 5. The local station 21 has communication units such as a switching system and a function for applying a photoelectric conversion or an electro-optical conversion to information signals so as to perform optical-fiber transfer.

The local station 21 is connected to the first transmission lines 22. The first transmission lines 22 are formed of single-mode fibers (hereinafter called "SM-type glass fibers") made of glass and has a length of N km. Each first transmission line 22 is multiplex-connected to n second transmission lines 4 through a line multiplexing apparatus 26. The line multiplexing apparatus 26 demultiplexes a multiplexed optical signal sent through the first transmission line 22 and sends to each second transmission line 4. The second transmission lines 4 are formed of copper lines and have, for example, a length of 100 m.

Since the transmission band limit of a general SM-type glass fiber cable is 30 Gbps•km, the transmission band limit of the first transmission lines 22 is 30/N Gbps. Because each first transmission line 22 is connected to the n second transmission lines 4, the transmission band limit per one line is 30/Nn Gbps/line. The transmission band limit of the second transmission lines 4 formed of copper lines is 300 (kbps•km)/0.1 (km) = 3 Mbps/line . Therefore, the bands which the communication terminal apparatuses 5 can use are those shown in Fig. 3B, with Nn being used as a variable.

In Fig. 3B, when Nn is 1.000 to 25,000, the transmission band limit of the first transmission lines 22 per one line is 1.2 Mbps/line to 30.0 Mbps/line. Since the transmission band limit of the second transmission lines 4 is 3.0 Mbps/line, the communication terminal apparatuses 5 can use a band of 1.2 Mbps/line to 3.0 Mbps/line.

In realistic topologies having an Nn of 10,000 to 20,000, the band use efficiency of the first transmission lines 22 is 100% and the band use efficiency of the second transmission lines 4 is 50% to 100%. However, the user can use a communication service of a low-frequency band of 1.5 Mbps/line to 3.0 Mbps/line.

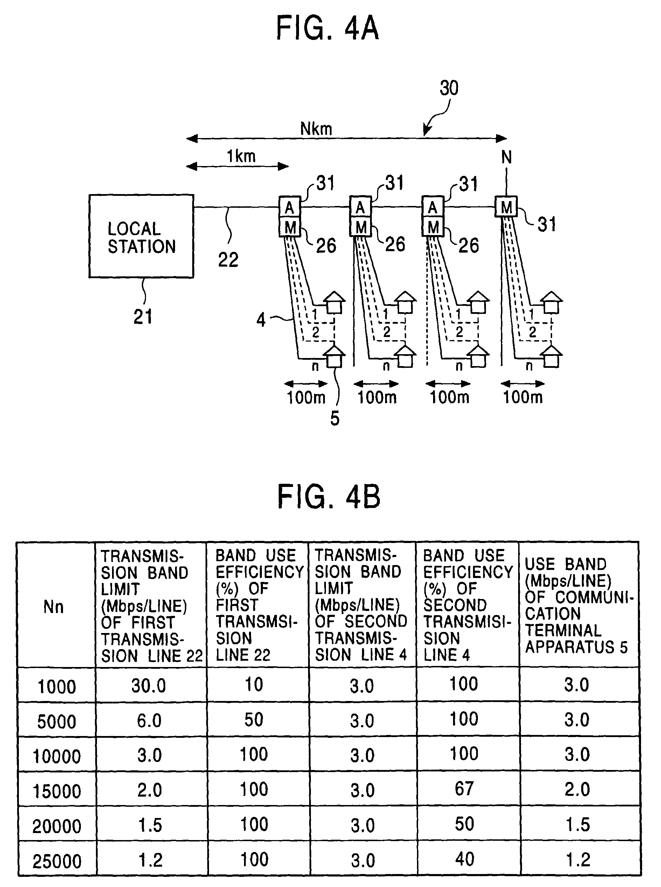

As a modification of the system shown in Fig. 3A, an information communication system 30 shown in Fig. 4A can be considered, in which relay amplification apparatuses 31 are disposed in a first transmission line 22. In Fig. 4A, relay amplification apparatuses 31 and line multiplexing apparatuses 26 are disposed, for example, at an interval of 1 km in the first transmission line 22. In the closest vicinity of the local station 21, the Nn lines corresponding to the Nn second transmission lines 4 are multiplexed in the first transmission line 22.

Therefore, the transmission band limit of the first transmission line 22 does not depend on the length N (km) because the relay amplification apparatuses 31 are used, but depends on the interval of the relay amplification apparatuses 31, namely, 1 km. The band limit is 30 Gbps. Since the Nn lines are multiplexed in the closest vicinity of the local station 21, the transmission band limit per line is 30/Nn Gbps/line. The transmission band limit of the second transmission lines 4 is 3.0 Mbps/line. Therefore, the communication terminal apparatuses 5 can use the bands shown in Fig. 4B, with Nn being used as variable.

In Fig. 4B, the transmission band limit of the first transmission line 22 per one line is 1.2 Mbps/line to 30.0 Mbps/line when Nn is 1,000 to 25,000. Since the transmission band limit of the second transmission lines 4 is 3.0 Mbps/line, the communication terminal apparatuses 5 can use a band of 1.2 Mbps/line to 3.0 Mbps/line.

In realistic topologies having an Nn of 10,000 to 20,000, the band use efficiency of the first transmission line 22 is 100% and the band use efficiency of the second transmission lines 4 is 50% to 100%. However, the user can use a communication service of a low-frequency band of 1.5 Mbps/line to 3.0 Mbps/line.

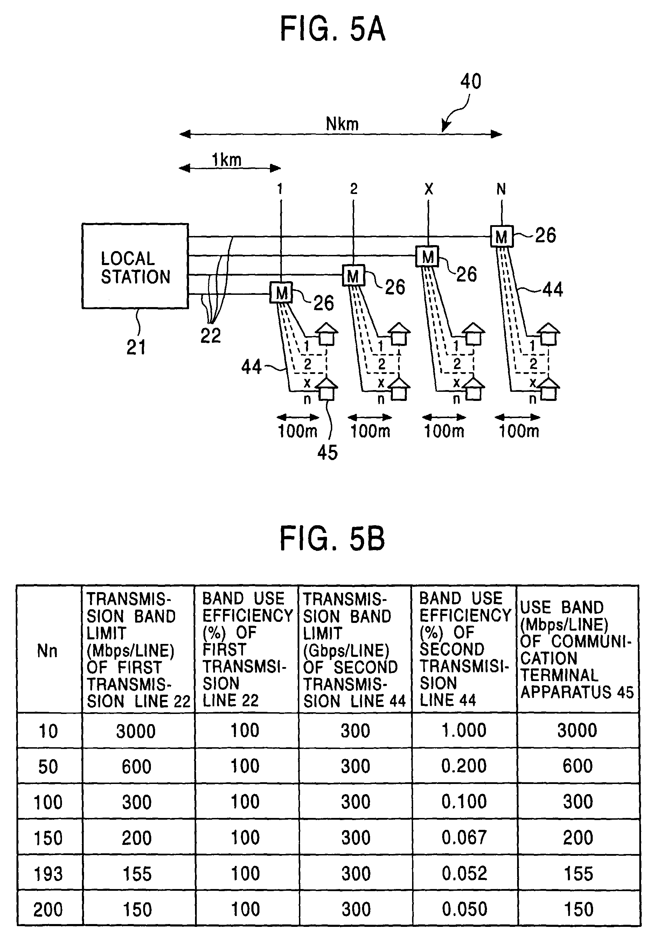

To implement larger-capacity information communication by increasing the transmission band limit of second transmission lines, an information communication system 40 in which second transmission lines are also formed of SM-type glass fibers has been proposed, as shown in Fig. 5. In the information communication system shown in Fig. 5A, the same symbols as those used in Fig. 3A are assigned to portions having the same structures as those in the information communication system 20 shown in Fig. 3A, and descriptions thereof will be omitted.

In Fig. 5A, second transmission lines 44 are, for example, formed of SM-type glass fibers 100 m long. This means that first transmission lines 22 and the second transmission lines 44 are both formed of SM-type glass fibers. Each communication terminal apparatus 45 has a function for applying a photoelectric conversion or an electro-optical conversion to information signals so as to perform optical-fiber transfer.

The transmission band limit of the first transmission lines 22 shown in Fig. 5A is 30/N Gbps. Since each line multiplexing apparatus 26 multiplexes n lines in each first transmission line 22, the transmission band limit of the first transmission lines 22 per one line is 30/Nn Gbps/line. Because each second transmission line 44 is, for example, 100 m long, the transmission band limit of the second transmission lines 44 is 300 Gbps/line. Therefore, the bands which the communication terminal apparatuses 45 can use are those shown in Fig. 5B, with Nn being used as a variable.

In Fig. 5B, when Nn is 10 to 200, the transmission band limit of the first transmission lines 22 per one line is 150 Mbps/line to 3,000 Mbps/line. Since the transmission band limit of the second transmission lines 4 is 300 Gbps/line, the communication terminal apparatuses 45 can use a band of 150 Mbps/line to 3,000 Mbps/line.

In realistic topologies having an Nn of 100 to 193, the band use efficiency of the first transmission lines 22 is remarkably as high as 100% and the user can use a communication service of a high-frequency band of 155 Mbps/line to 300 Mbps/line.

However, the band use efficiency of the second transmission lines 44 is much as low as 0.052% to 0.100%. Even with unrealistic topologies having an Nn of 10 to 50, the band use efficiency of the second transmission lines 44 is as low as 0.2% to 1.0%.

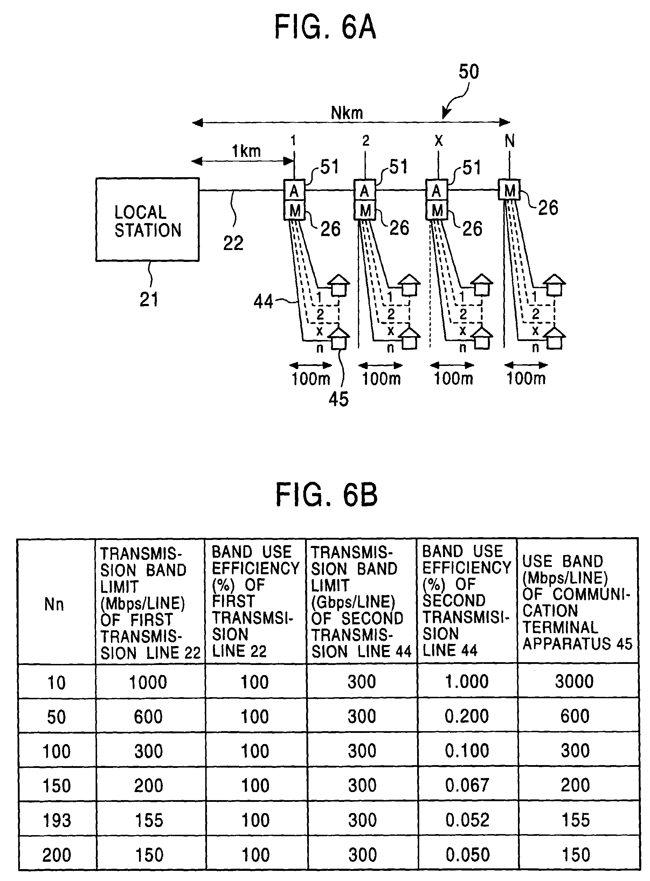

An information communication system shown in Fig. 6A can also be considered as a system in which second transmission lines are formed of SM-type optical fibers. In the information communication system shown in Fig. 6A, the same symbols as those used in Fig. 5A are assigned to portions having the same structures as those in the information communication system 40 shown in Fig. 5A, and descriptions thereof will be omitted.

The information communication system 50 shown in Fig. 6A differs from the information communication system 40 shown in Fig. 5A in that relay amplification apparatuses 51 and line multiplexing apparatuses 26 are disposed, for example, at an interval of 1 km in a first transmission line 22. The first transmission line 22 is multiplex-connected to n second transmission lines through each line multiplexing apparatus 26.

Therefore, the transmission band limit of the first transmission line 22 does not depend on the length N (km) but depends on the distance between the relay amplification apparatuses 51. The band limit is 30 Gbps. Since each line multiplexing apparatus 26, disposed at an interval of 1 km, is connected to n second transmission lines 44, the transmission band limit per line is 30/Nn Gbps/line. Because each second transmission line 44 is, for example, 100 m long, the transmission band limit of the second transmission lines 44 is 300 Gbps/line. Therefore, the bands which the communication terminal apparatuses 45 can use are those shown in Fig. 6B, with Nn being used as a variable.

In Fig. 6B, when Nn is 10 to 200, the transmission band limit of the first transmission lines 22 per one line is 150 Mbps/line to 3,000 Mbps/line. Since the transmission band limit of the second transmission lines 44 is 300 Gbps/line, the communication terminal apparatuses 45 can use a band of 150 Mbps/line to 3,000 Mbps/line.

In realistic topologies having an Nn of 100 to 193, the band use efficiency of the first transmission line 22 is remarkably as high as 100% and the user can use a communication service of a high-frequency band of 155 Mbps/line to 300 Mbps/line.

However, the band use efficiency of the second transmission lines 44 is much as low as 0.052% to 0.100%. Even with unrealistic topologies having an Nn of 10 to 50, the band use efficiency of the second transmission lines 44 is as low as 0.2% to 1.0%.

As described above, as in the information communication systems 1 and 11 shown in Fig. 1 and Fig. 2, when the first transmission lines 3 are formed of copper lines, the user cannot receive a communication service of a high-frequency transmission band.

As in the information communication systems 20 and 30 shown in Fig. 3 and Fig. 4, even when the first transmission lines 22 are formed of SM-type glass fibers, a communication band which the user can use cannot be much increased.

As shown in Fig. 5 and Fig. 6, when the first transmission lines 22 and the second transmission lines 44 are both formed of SM-type glass fiber cables, the user can use a communication band much increased, but the band use efficiency of the second transmission lines 44 is extremely low.

SUMMARY OF THE INVENTION

The present invention has been made in consideration of the above situation. Accordingly, it is an object of the present invention to provide an information communication system which allows a transmission band which the user can use to be much increased with the highest efficiency.

The foregoing object is achieved in one aspect of the present invention through the provision of an information communication system for transferring information from a local station to communication terminal apparatuses having a receiving function, including a first transmission line for transferring a plurality of multiplexed information signals from the local station which at least transmits information signals; a plurality of second transmission lines connected to the first transmission line for transferring each of the multiplexed and transferred information signals; and communication terminal apparatuses connected to the second transmission lines and having a function for receiving the transferred information signals, wherein the first transmission line and the second transmission lines are formed of optical fibers different in type from each other, and the distance product of the transmission band limit of the first transmission line is larger than that of the transmission band limit of the second transmission lines.

The foregoing object is achieved in another aspect of the present invention through the provision of an information transfer method for transferring information from a local station to a communication terminal apparatus having a receiving function, including a first transfer step of transferring, from the local station which at least transmits an information signal, the information signal through a first transmission line; a second transfer step of further transferring the transferred information signal through a second transmission line connected to the first transmission line; and a receiving step of receiving the transferred information signal by a communication terminal apparatus connected to the second transmission line, wherein the first transmission line and the second transmission line are formed of optical fibers different in type from each other, and the distance product of the transmission band limit of the first transmission line is larger than that of the transmission band limit of the second transmission line.

According to the information communication system and the information transfer method, the first transmission line and the second transmission lines are formed of optical fibers different in type, and the distance product of the transmission band limit of the first transmission line is larger than that of the transmission band limit of the second transmission lines.

Since the first transmission line and the second transmission lines are formed of optical fibers having high-frequency transmission band limits, the communication terminal apparatuses can use high-frequency bands. In addition, since the distance product of the transmission band limit of the first transmission line is made larger than that of the transmission band limit of the second transmission lines, with the reduction of the transmission band limit caused by a transmission loss in the first transmission line being taken into account, the use efficiency of the first transmission line and that of the second transmission lines are improved.

BRIEF DESCRIPTION OF THE DRAWINGS

Fig. 1A is a view of a related information communication system, and Fig. 1B shows frequency bands and use efficiency in the system.
Fig. 2 is a view of another related information communication system.
Fig. 3A is a view of still another related information communication system, and Fig. 3B shows frequency bands and use efficiency in the system.
Fig. 4A is a view of yet another related information communication system, and Fig. 4B shows frequency bands and use efficiency in the system.

Fig. 5A is a view of a further related information communication system, and Fig. 5B shows frequency bands and use efficiency in the system.
Fig. 6A is a view of a still further related information communication system, and Fig. 6B shows frequency bands and use efficiency in the system.
Fig. 7A is a view of an information communication system according to a preferred embodiment of the present invention, and Fig. 7B shows frequency bands and use efficiency in the system.
Figs. 8A and 8B show a first transmission line and a second transmission line in the information communication system of the present invention.
Fig. 9A is a view of an information communication system according to another embodiment of the present invention, and Fig. 9B shows frequency bands and use efficiency in the system.
Fig. 10A is a view of an information communication system according to yet another embodiment of the present invention, and Fig. 10B shows frequency bands and use efficiency in the system.
Fig. 11 is a view of a second transmission line in the information communication system according to the yet another embodiment of the present invention.

DETAILED DESCRIPTION OF THE PREFERRED EMBODIMENTS

Preferred embodiments of the present invention will be described below in detail by referring to the attached drawings.

Since the following embodiments are suited specific examples of the present invention, various preferable technical restrictions are applied. The scope of the present invention is not limited to these embodiments unless otherwise it is especially stated in the following description that restrictions are applied to the present invention.

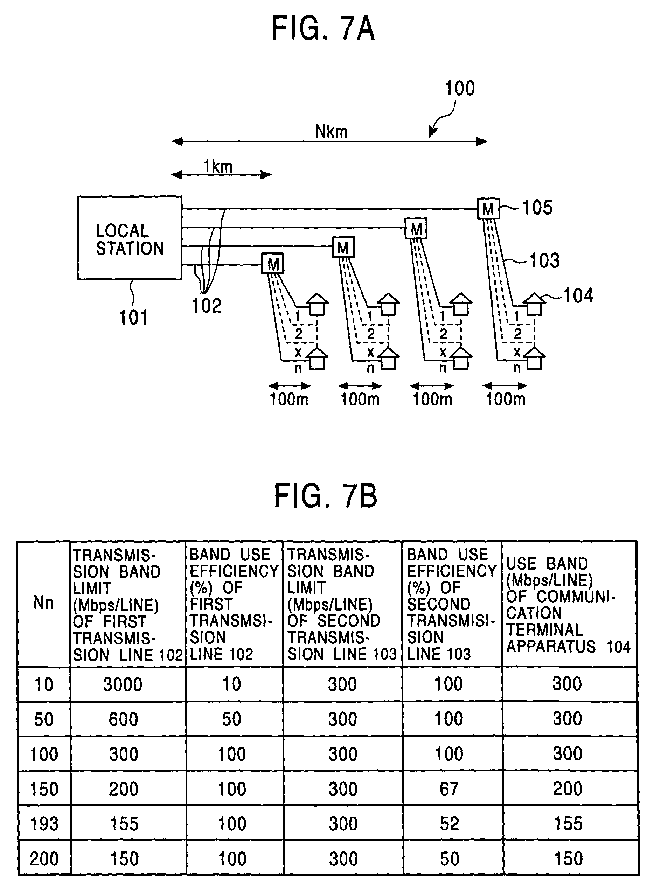

Fig. 7 is a structural view of a communication information network according to a suited embodiment of the present invention. A communication information network 100 will be described below by referring to Fig. 7.

The information communication system 100 shown in Fig. 7A includes a local station 101, first transmission lines 102, second transmission lines 103, and communication terminal apparatuses 104. The local station 101 has communication units such as a switching system and a function for applying a photoelectric conversion or an electro-optical conversion to information signals so as to perform optical-fiber transfer.

The local station 101 is connected to the first transmission lines 102. Each first transmission line 102 is connected to a line multiplexing apparatus 105. The line multiplexing apparatus 105 assigns multiplexed information signals (optical signals) to be transferred through the first transmission line 102 to second transmission lines 102.

Each first transmission line 102 is connected a plurality of second transmission lines 103. Through a line multiplexing apparatus 105, n second transmission lines 103 are multiplex-connected to a first transmission line 102. Each second transmission line 103 is connected to a communication terminal apparatus 104. The communication terminal apparatus 104 has a function for applying a photoelectric conversion or an electro-optical conversion to information signals so as to perform optical-fiber transfer. The user transmits and receives information by using the communication terminal apparatus 104. Each first transmission line 102 is N km long, and each second transmission line 103 is, for example, 100 m long.

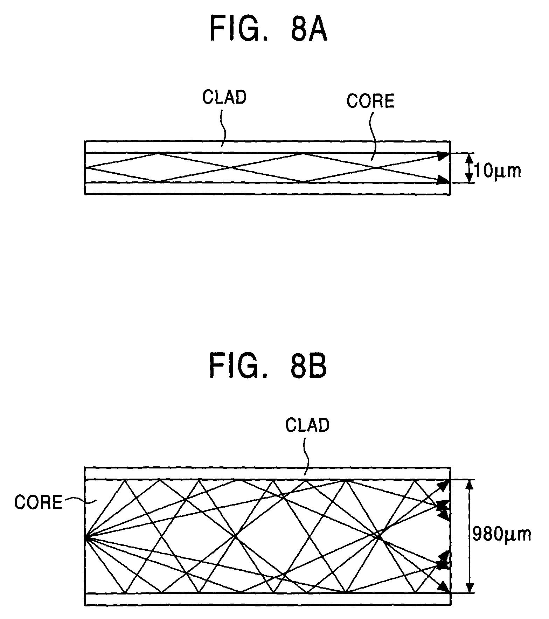

The first transmission lines 102 are formed of single-mode glass fibers (SM-type glass optical fibers) mainly made of quartz. The second transmission lines 103 are formed of stepped-index optical fibers (SI-type plastic optical fibers) made of plastics. Fig. 8 shows the structural views of SM-type glass fibers and SI-type plastic fibers. The SM-type glass fibers and the SI-type glass fibers will be described below by referring to Fig. 8.

The SM-type glass fibers shown in Fig. 8A have only one propagation mode in which an optical signal is propagated through the core, and the core or the core and a clad are mainly made of quartz. The SM-type glass fibers have, for example, a core diameter of 10 μm, a transmission loss of 0.15 dB/km, and a transmission band of 30 Gbps・km.

The SI-type plastic fibers shown in Fig. 8B have a refractive index changed in a step manner between the core and the clad, and are used for multi-mode propagation. The SI-type plastic fibers have, for example, a core diameter of 980 μm, a transmission loss of 0.15 dB/km, and a transmission band of 30 Mbps・km.

Therefore, the transmission band limit of the first transmission lines 102 shown in Fig. 7 is 30/N Gbps. Since each line multiplexing apparatus 105 multiplexes n lines in one first transmission line 102, the transmission band limit per one line is 30/Nn Gbps/line. Because each second transmission line 103 is, for example, 100 m long, the transmission band limit of the second transmission lines 103 is 300 Mbps/line. Therefore, the bands which the communication terminal apparatuses 104 can use are those shown in Fig. 7B, with Nn being used as a variable.

In Fig. 7B, when Nn is 10 to 200, the transmission band limit the first transmission lines 102 per one line of is 150 Mbps/line to 3,000 Mbps/line. Since the transmission band limit of the second transmission lines 103 is 300 Mbps/line, the communication terminal apparatuses 104 can use a band of 150 Mbps/line to 300 Mbps/line.

In realistic topologies having an Nn of 100 to 193, each communication terminal apparatus 104 can perform communication in a transmission band of 155 Mbps to 300 Mbps.

The band use efficiency of the first transmission lines 102 is 100% and the band use efficiency of the second transmission lines 103 is 52% to 100%. Information communication is allowed while the first transmission lines 102 and the second transmission lines 103 are used much efficiently. As a result, the user can use a communication service of a high-frequency band, such as 155 Mbps/line.

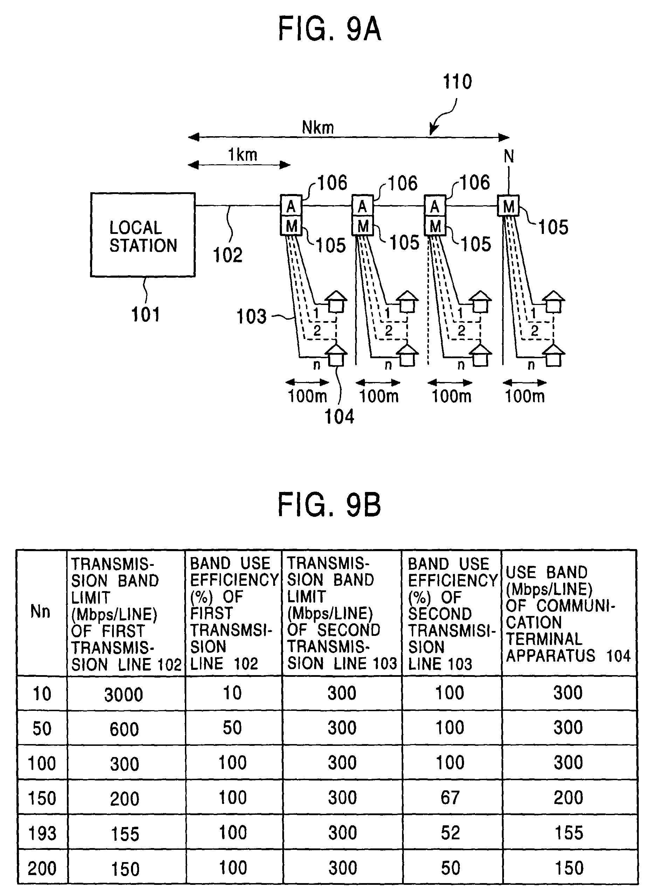

Fig. 9 is a structural view of an information communication system according to a second embodiment of the present invention. An information communication system 110 will be described below by referring to Fig. 9. In the information communication system 110 shown in Fig. 9A, the same symbols as those used in Fig. 7A are assigned to portions having almost the same structures as those in the information communication system 100 shown in Fig. 7A, and descriptions thereof will be omitted.

In Fig. 9A, relay amplification apparatuses 106 are disposed at a predetermined interval (for example, 1 km) in a first transmission line 102. The relay amplification apparatuses 106 amplify an optical signal to be transferred through the first transmission line 102 to prevent the optical signal, to be transferred through the first transmission line 102, from deteriorating. In the first transmission line 102, N line multiplexing apparatuses 105 are also disposed at an interval of, for example, 1 km. Each line multiplexing apparatus 105 is connected to n second transmission lines 103.

The transmission band limit of the first transmission line 102 does not depend on its length, N km, and is 30 Gbps since the relay amplification apparatuses 106 are disposed at an interval of 1 km. Because the first transmission line 102 is connected to Nn second transmission lines 103, the transmission band limit per one line is 30/Nn Gbps/line. Therefore, the bands which each communication terminal apparatus 104 can use are those shown in Fig. 9B, with Nn being used as a variable.

In Fig. 9B, when Nn is 10 to 200, the transmission band limit of the first transmission line 102 per one line is 150 Mbps/line to 3,000 Mbps/line. Since the transmission band limit of the second transmission lines 103 is 300 Mbps/line, the communication terminal apparatuses 104 can use a band of 150 Mbps/line to 300 Mbps/line.

In realistic topologies having an Nn of 100 to 193, each communication terminal apparatus 104 can perform communication in a transmission band of 155 Mbps to 300 Mbps.

The band use efficiency of the first transmission line 102 is 100% and the band use efficiency of the second transmission lines 103 is 52% to 100%. The first transmission line 102 and the second transmission lines 103 are used remarkably efficiently. As a result, the user can use a communication service of a high-frequency band, such as 155 Mbps/line.

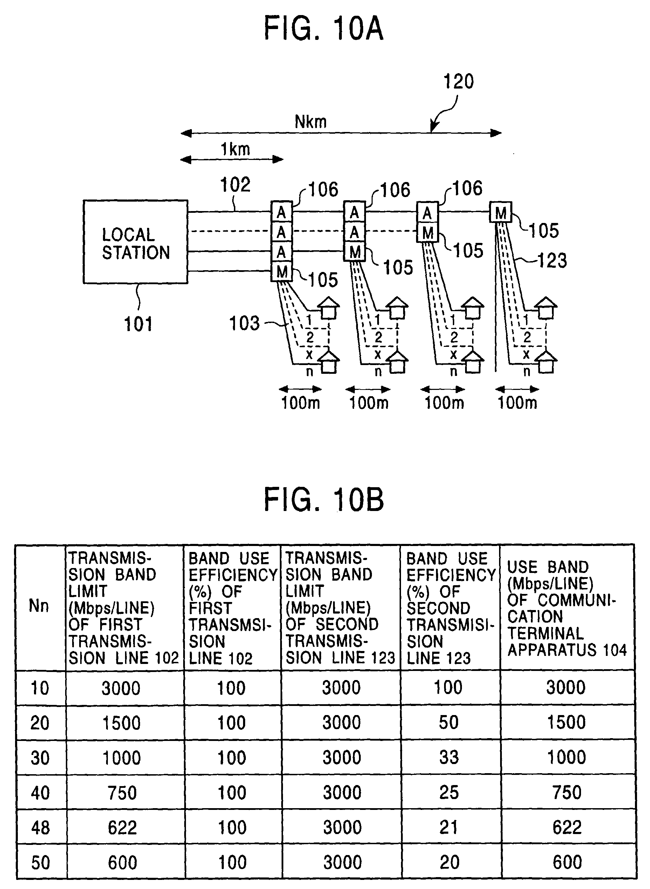

Fig. 10 is a structural view of an information communication system according to a third embodiment of the present invention. An information communication system 120 will be described below by referring to Fig. 10. In the information communication system 120 shown in Fig. 10A, the same symbols as those used in Fig. 7A and Fig. 9A are assigned to portions having almost the same structures as those in the information communication systems 100 and 110 shown in Figs. 7A and 9A, and descriptions thereof will be omitted.

In Fig. 10A, relay amplification apparatuses 106 are disposed, for example, at an interval of 1 km in first transmission lines 102. A line multiplexing apparatus 105 is disposed at each first transmission line 102. Each line multiplexing apparatus 105 is connected to n second transmission lines 123, for example, 100 m long.

The second transmission lines 123 are formed of graded-index plastic optical fibers (hereinafter called GI-type plastic fibers).

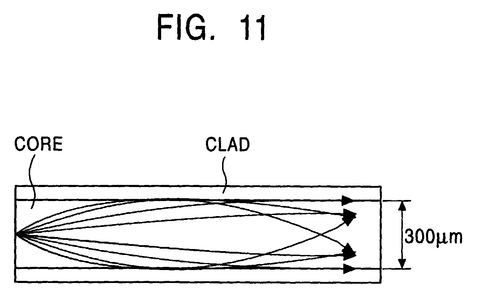

Fig. 11 is a structural view of GI-type plastic fibers. The GI-type plastic fibers have a core refractive-index distribution in which the refractive index is higher at positions closer to the center and lower at positions closer to the peripheral. The transmission mode of an optical signal transferred through the core is a multimode. The GI-type plastic fibers have a core diameter of 300 μm, a transmission loss of 0.15 dB/m, and a transmission band of 30 Mbps • km.

Therefore, the transmission band limit of the first transmission lines 102 is 30 Gbps • km. Since the relay amplification apparatuses 106 are disposed at an interval of 1 km in the first transmission lines 102, its transmission band limit does not depend on N km and is 30 Gbps. Since n lines are multiplexed in one first transmission line 102, the transmission band limit per one line is 30/n Gbps/line. The transmission band limit of the second transmission lines 123 is 3,000 Mbps. Therefore, the transmission bands which the communication terminal apparatuses 104 can use depend on n and are shown in Fig. 10B.

In Fig. 10B, when n is 10 to 50, the transmission band limit of the first transmission lines 102 per one line is 600 Mbps/line to 3,000 Mbps/line. Since the transmission band limit of the second transmission lines 123 is 3,000 Mbps/line, the communication terminal apparatuses 104 can use a band of 600 Mbps/line to 3,000 Mbps/line.

In realistic topologies having an n of 10 to 48, each communication terminal apparatus 104 can perform communication in a transmission band of 622 Mbps/line to 3,000 Mbps/line.

The band use efficiency of the first transmission lines 102 is as remarkably high as 100% and the band use efficiency of the second transmission lines 123 is as relatively high as 21% to 100%. As a result, the user can use a communication service of a high-frequency band, such as 622 Mbps/line.

According to the above embodiments, since the first transmission lines 102 are formed of glass optical fibers and the second transmission lines 103 and 123 are formed of plastic optical fibers, a high-frequency-band communication service is provided, and information communication systems having a high band-use efficiency is provided with the maximum use of the performance of the first transmission lines 102 and the second transmission lines 103 and 123.

Because the second transmission lines 103 and 123 are formed of plastic optical fibers, the cost is reduced as compared with a case in which the lines are formed of glass optical fibers. Specifically, plastic fibers can usually be made at a cost one fifth to one tenth that of glass fibers.

In addition, since plastic fibers generally have larger cross-sectional diameters than glass fibers, the installation performance of a communication system is improved by using plastic fibers for the second transmission lines 103 and 123, which need to be connected to information communication terminals installed, for example, at houses.

More specifically, when optical fibers have large diameters, precise core-adjustment tools such as ferrules are not required to connect fibers to fibers or fibers to peripheral apparatuses in installation. A required precision is made loose in installation. Therefore, the installation performance of a communication system is improved by using plastic fibers, which have large cross-sectional diameters.

As described above, according to the present invention, an information communication system which allows a transmission band which the user can use to be much increased with the highest efficiency is provided.

**Claims**

1. An information communication system for transferring information from a local station (101) to communication terminal apparatuses (104) having a receiving function, comprising:

   a first transmission line (102) for transferring a plurality of multiplexed information signals from the local station (101) which at least transmits information signals;
   a plurality of second transmission lines (103) connected to the first transmission line (102) for transferring each of the multiplexed and transferred information signals; and
   communication terminal apparatuses (104) connected to the second transmission lines (103) and having a function for receiving the transferred information signals,
   wherein the first transmission line (102) and the second transmission lines (103) are formed of optical fibers different in type from each other, and the distance product of the transmission band limit of the first transmission line (102) is larger than that of the transmission band limit of the second transmission lines (103).

2. An information communication system according to Claim 1, wherein the first transmission line (102) is formed of optical fibers made of glass and the second transmission lines (103) are formed of optical fibers made of plastics.

3. An information communication system according to Claim 2, wherein the second transmission lines (103) are formed of stepped-index plastic optical fibers.

4. An information communication system according to Claim 2, wherein the second transmission lines (103) are formed of graded-index plastic optical fibers.

5. An information communication system according to Claim 1, wherein a relay amplification apparatus for amplifying the multiplexed information signals is disposed in the first transmission line (102).

6. An information transfer method for transferring information from a local station (101) to a communication terminal apparatus (104) having a receiving function, comprising:

   a first transfer step of transferring, from the local station (101) which at least transmits an information signal, the information signal through a first transmission line (102);
   a second transfer step of further transferring the transferred information signal through a second transmission line (103) connected to the first transmission line; and
   a receiving step of receiving the transferred information signal by a communication terminal apparatus (104) connected to the second transmission line (103),
   wherein the first transmission line (102) and the second transmission line (103) are formed of optical fibers different in type from each other, and the distance product of the transmission band limit of the first transmission line (102) is larger than that of the transmission band limit of the second transmission line (103).

# FIG. 1A

# FIG. 1B

| N(km) | TRANSMISSION BAND LIMIT (Kbps/LINE) OF FIRST TRANSMISSION LINE 3 | BAND USE EFFICIENCY (%) OF FIRST TRANSMISSION LINE 3 | USE BAND (Kbps/LINE) OF COMMUNICATION TERMINAL APPARATUS 5 |
|---|---|---|---|
| 1 | 273 | 94 | 256 |
| 2 | 143 | 90 | 128 |
| 3 | 97 | 66 | 64 |
| 4 | 73 | 87 | 64 |
| 5 | 59 | 100 | 59 |

# FIG. 2

# FIG. 3A

# FIG. 3B

| Nn | TRANSMIS-SION BAND LIMIT (Mbps/LINE) OF FIRST TRANSMIS-SION LINE 22 | BAND USE EFFICIENCY (%) OF FIRST TRANSMSI-SION LINE 22 | TRANSMIS-SION BAND LIMIT (Mbps/LINE) OF SECOND TRANSMIS-SION LINE 4 | BAND USE EFFICIENCY (%) OF SECOND TRANSMISI-SION LINE 4 | USE BAND (Mbps/LINE) OF COMMUNI-CATION TERMINAL APPARATUS 5 |
|---|---|---|---|---|---|
| 1000 | 30.0 | 10 | 3.0 | 100 | 3.0 |
| 5000 | 6.0 | 50 | 3.0 | 100 | 3.0 |
| 10000 | 3.0 | 100 | 3.0 | 100 | 3.0 |
| 15000 | 2.0 | 100 | 3.0 | 67 | 2.0 |
| 20000 | 1.5 | 100 | 3.0 | 50 | 1.5 |
| 25000 | 1.2 | 100 | 3.0 | 40 | 1.2 |

# FIG. 4A

# FIG. 4B

| Nn | TRANSMIS-SION BAND LIMIT (Mbps/LINE) OF FIRST TRANSMIS-SION LINE 22 | BAND USE EFFICIENCY (%) OF FIRST TRANSMSI-SION LINE 22 | TRANSMIS-SION BAND LIMIT (Mbps/LINE) OF SECOND TRANSMIS-SION LINE 4 | BAND USE EFFICIENCY (%) OF SECOND TRANSMISI-SION LINE 4 | USE BAND (Mbps/LINE) OF COMMUNI-CATION TERMINAL APPARATUS 5 |
|---|---|---|---|---|---|
| 1000 | 30.0 | 10 | 3.0 | 100 | 3.0 |
| 5000 | 6.0 | 50 | 3.0 | 100 | 3.0 |
| 10000 | 3.0 | 100 | 3.0 | 100 | 3.0 |
| 15000 | 2.0 | 100 | 3.0 | 67 | 2.0 |
| 20000 | 1.5 | 100 | 3.0 | 50 | 1.5 |
| 25000 | 1.2 | 100 | 3.0 | 40 | 1.2 |

# FIG. 5A

# FIG. 5B

| Nn | TRANSMIS-SION BAND LIMIT (Mbps/LINE) OF FIRST TRANSMIS-SION LINE 22 | BAND USE EFFICIENCY (%) OF FIRST TRANSMSI-SION LINE 22 | TRANSMIS-SION BAND LIMIT (Gbps/LINE) OF SECOND TRANSMIS-SION LINE 44 | BAND USE EFFICIENCY (%) OF SECOND TRANSMISI-SION LINE 44 | USE BAND (Mbps/LINE) OF COMMUNI-CATION TERMINAL APPARATUS 45 |
|---|---|---|---|---|---|
| 10 | 3000 | 100 | 300 | 1.000 | 3000 |
| 50 | 600 | 100 | 300 | 0.200 | 600 |
| 100 | 300 | 100 | 300 | 0.100 | 300 |
| 150 | 200 | 100 | 300 | 0.067 | 200 |
| 193 | 155 | 100 | 300 | 0.052 | 155 |
| 200 | 150 | 100 | 300 | 0.050 | 150 |

## FIG. 6A

## FIG. 6B

| Nn | TRANSMIS-SION BAND LIMIT (Mbps/LINE) OF FIRST TRANSMIS-SION LINE 22 | BAND USE EFFICIENCY (%) OF FIRST TRANSMSI-SION LINE 22 | TRANSMIS-SION BAND LIMIT (Gbps/LINE) OF SECOND TRANSMIS-SION LINE 44 | BAND USE EFFICIENCY (%) OF SECOND TRANSMISI-SION LINE 44 | USE BAND (Mbps/LINE) OF COMMUNI-CATION TERMINAL APPARATUS 45 |
|---|---|---|---|---|---|
| 10 | 1000 | 100 | 300 | 1.000 | 3000 |
| 50 | 600 | 100 | 300 | 0.200 | 600 |
| 100 | 300 | 100 | 300 | 0.100 | 300 |
| 150 | 200 | 100 | 300 | 0.067 | 200 |
| 193 | 155 | 100 | 300 | 0.052 | 155 |
| 200 | 150 | 100 | 300 | 0.050 | 150 |

# FIG. 7A

# FIG. 7B

| Nn | TRANSMIS-SION BAND LIMIT (Mbps/LINE) OF FIRST TRANSMIS-SION LINE 102 | BAND USE EFFICIENCY (%) OF FIRST TRANSMSI-SION LINE 102 | TRANSMIS-SION BAND LIMIT (Mbps/LINE) OF SECOND TRANSMIS-SION LINE 103 | BAND USE EFFICIENCY (%) OF SECOND TRANSMISI-SION LINE 103 | USE BAND (Mbps/LINE) OF COMMUNI-CATION TERMINAL APPARATUS 104 |
|---|---|---|---|---|---|
| 10 | 3000 | 10 | 300 | 100 | 300 |
| 50 | 600 | 50 | 300 | 100 | 300 |
| 100 | 300 | 100 | 300 | 100 | 300 |
| 150 | 200 | 100 | 300 | 67 | 200 |
| 193 | 155 | 100 | 300 | 52 | 155 |
| 200 | 150 | 100 | 300 | 50 | 150 |

# FIG. 8A

CLAD       CORE

10μm

# FIG. 8B

CLAD

CORE

980μm

# FIG. 9A

# FIG. 9B

| Nn | TRANSMIS-SION BAND LIMIT (Mbps/LINE) OF FIRST TRANSMIS-SION LINE 102 | BAND USE EFFICIENCY (%) OF FIRST TRANSMSI-SION LINE 102 | TRANSMIS-SION BAND LIMIT (Mbps/LINE) OF SECOND TRANSMIS-SION LINE 103 | BAND USE EFFICIENCY (%) OF SECOND TRANSMISI-SION LINE 103 | USE BAND (Mbps/LINE) OF COMMUNI-CATION TERMINAL APPARATUS 104 |
|---|---|---|---|---|---|
| 10 | 3000 | 10 | 300 | 100 | 300 |
| 50 | 600 | 50 | 300 | 100 | 300 |
| 100 | 300 | 100 | 300 | 100 | 300 |
| 150 | 200 | 100 | 300 | 67 | 200 |
| 193 | 155 | 100 | 300 | 52 | 155 |
| 200 | 150 | 100 | 300 | 50 | 150 |

# FIG. 10A

# FIG. 10B

| Nn | TRANSMIS-SION BAND LIMIT (Mbps/LINE) OF FIRST TRANSMIS-SION LINE 102 | BAND USE EFFICIENCY (%) OF FIRST TRANSMSI-SION LINE 102 | TRANSMIS-SION BAND LIMIT (Mbps/LINE) OF SECOND TRANSMIS-SION LINE 123 | BAND USE EFFICIENCY (%) OF SECOND TRANSMISI-SION LINE 123 | USE BAND (Mbps/LINE) OF COMMUNI-CATION TERMINAL APPARATUS 104 |
|----|----|----|----|----|----|
| 10 | 3000 | 100 | 3000 | 100 | 3000 |
| 20 | 1500 | 100 | 3000 | 50 | 1500 |
| 30 | 1000 | 100 | 3000 | 33 | 1000 |
| 40 | 750 | 100 | 3000 | 25 | 750 |
| 48 | 622 | 100 | 3000 | 21 | 622 |
| 50 | 600 | 100 | 3000 | 20 | 600 |

# FIG. 11

CORE             CLAD

300μm